(19) Europäisches Patentamt
European Patent Office
Office européen des brevets

(11) **EP 1 458 599 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **02795024.5**

(22) Anmeldetag: **18.12.2002**

(51) Int Cl.:
**B60S 1/08** (2006.01)

(86) Internationale Anmeldenummer:
**PCT/DE2002/004653**

(87) Internationale Veröffentlichungsnummer:
**WO 2003/051693 (26.06.2003 Gazette 2003/26)**

(54) **VERFAHREN ZUR FEUCHTIGKEITSABHÄNGIGEN STEUERUNG EINER SCHEIBENWISCHVORRICHTUNG**

METHOD FOR THE MOISTURE-DEPENDENT CONTROL OF A WINDSCREEN WIPER DEVICE

PROCEDE DE COMMANDE D'UN DISPOSITIF D'ESSUIE-GLACE EN FONCTION DE L'HUMIDITE

(84) Benannte Vertragsstaaten:
**DE ES FR GB IT SE**

(30) Priorität: **19.12.2001 DE 10162691**

(43) Veröffentlichungstag der Anmeldung:
**22.09.2004 Patentblatt 2004/39**

(73) Patentinhaber: **ROBERT BOSCH GMBH**
**70442 Stuttgart (DE)**

(72) Erfinder:
• **MOOSMANN, Johannes**
**78144 Tennenbronn (DE)**
• **KRUEGER, Hartmut**
**77830 Buehlertal (DE)**

(56) Entgegenhaltungen:
**EP-A- 1 010 594          EP-A- 1 300 304**
**DE-A- 3 929 196          DE-A- 4 330 112**
**US-A- 5 757 155**

EP 1 458 599 B1

**Beschreibung**

Die Erfindung betrifft ein Verfahren zur feuchtigkeitsabhängigen Steuerung einer Scheibenwischvorrichtung, insbesondere einer Scheibenwischvorrichtung eines Kraftfahrzeuges.

Moderne Scheibenwischvorrichtungen von Kraftfahrzeugen werden in Abhängigkeit von einer auf einer Scheibe des Kraftfahrzeuges vorhandenen Regenmenge gesteuert. Dabei übernimmt ein Regensensor die Aufgabe, die auf der Scheibe vorhandene Regenmenge zu erfassen und aufgrund dieser Daten Intervalllängen zwischen einzelnen Wischzyklen der Scheibenwischvorrichtung zu steuern. Außerdem ist es auf der Grundlage der vom Regensensor ermittelten Daten möglich, eine Wischgeschwindigkeit von Wischerblättern der Scheibenwischvorrichtung an aktuell vorherrschende Feuchtigkeitsbedingungen auf der Scheibe anzupassen.

In der Offenlegungsschrift DE 39 29 196 A1 wird ein Verfahren beschrieben, bei dem Intervalllängen zwischen den Wischzyklen in Abhängigkeit von einer Stromaufnahme der Scheibenwischvorrichtung ermittelt werden.

Im Stand der Technik sind weitere modellbasierte Konzepte zur Regelung eines Elektromotors einer Scheibenwischvorrichtung bekannt, mit deren Hilfe es möglich ist, Informationen über einen tatsächlichen Lastzustand eines Wischarms der Scheibenwischvorrichtung zu bestimmen.

Aus EP 1300 304 A2 ist ein gattungsgemäßes Verfahren zur feuchtigkeitsabhängigen Steuerung einer Scheibenwischvorrichtung bekannt. Bei dem bekannten Verfahren wird zur Reduzierung von Ratterschwingungen in elektronisch geregelten Scheibenwischanlagen von Kraftfahrzeugen vorgeschlagen, eine Regelung derart zu optimieren, dass relevante Systemgrößen an einem Wischarm anhand eines mathematischen Modells der Scheibenwischanlagen für die Regelung herangezogen werden. Mit Hilfe einer Erkennungseinrichtung können optimierte Zustandsgrößen des mathematischen Modells zur Bildung einer Korrekturgröße verwendet werden, die einer Eingangsgröße der Scheibenwischanlage zugeführt wird. Zur Optimierung von wenigstens einer der verwendeten Prozessgrößen werden Kennfelddaten herangezogen. Als Kennfelddaten werden Reibungskoeffizienten und/oder eine auf den Wischarm wirkende Windlast verwendet. Die Reibungskoeffizienten ergeben sich aus Daten über einen Feuchtigkeitszustand einer Scheibe und aus Daten über eine Wischgeschwindigkeit. Die Windlast ergibt sich aus Daten über eine Fahrzeuggeschwindigkeit und einen Wischwinkel.

Aus EP 1010 594 A1 ist ein System und ein Verfahren zur Steuerung einer Wischeinrichtung bekannt. Die Wischeinrichtung weist einen elektrischen Motor auf, der mit wenigstens einem Wischerarm verbunden ist, der über ein Wischerblatt verfügt. Das Steuersystem weist einen ersten Sensor auf, der eine Reibung zwischen dem Wischerblatt und einer Fahrzeugscheibe ermittelt. Weiterhin ist ein zweiter Sensor vorgesehen, der eine Windlast erfasst, die auf das Wischerblatt einwirkt. Anhand der zwei Sensoren wird ein Wert für die Menge der Feuchtigkeit auf der Scheibe ermittelt. Aufgrund der ermittelten Menge der Feuchtigkeit wird das Wischersystem in entsprechender Weise angesteuert.

Es ist die Aufgabe der vorliegenden Erfindung, ein verbessertes Verfahren zur feuchtigkeitsabhängigen Steuerung einer Scheibenwischvorrichtung eines Kraftfahrzeuges sowie eine Vorrichtung, mit der das Verfahren verwendbar ist, bereit zu stellen.

Die Aufgabe wird mit Verfahren, welche die Verfahrensschritte gemäß Anspruch 1 aufweist und mit einer Steuereinheit mit den Merkmalen gemäß Anspruch 11 gelöst.

Weitere bevorzugte Ausgestaltungen der Erfindung sind in den abhängigen Ansprüchen angegeben.

Erfindungsgemäß wird ein Verfahren zur Steuerung einer Intervalllänge zwischen zwei Wischzyklen und/oder einer Geschwindigkeit einer Wischereinheit mit einem Wischer für eine Scheibe, insbesondere eines Kraftfahrzeuges vorgeschlagen, wobei eine Wischfunktion abhängig von einem Feuchtigkeitsgrad der Scheibe geregelt wird.

Erfindungsgemäß ist es vorgesehen, dass ein Reibungsmoment zwischen der Wischereinheit und der Scheibe durch ein Herausrechnen eines Windlastanteils aus dem Lastmoment auf die Wischereinheit ermittelt wird. Es wird also ein Reibungsanteil des Lastmomentes ermittelt und als Maß für den Feuchtigkeitsgrad verwendet.

Dadurch ist in vorteilhafter Weise eine für die Bedürfnisse des Verfahrens präzisere Ermittlung des Lastmoments der Wischereinheit unterstützt. Mittels einer Ermittlung einer Reibzahl in Abhängigkeit einer Wischarmgeschwindigkeit bekommt man eine Charakteristik, die mit entsprechenden Normcharakteristika verglichen wird. Bei einer Abweichung von den Normcharakteristika kann auch eine Teilbefeuchtung der Scheibe (z.B. durch Spritzwasser) und gegebenenfalls auch eine Verschmutzung der Scheibe erkannt werden.

Günstigerweise kann dadurch bedarfsgerecht die Wischgeschwindigkeit und/oder eine Wischzyklenanzahl erhöht oder erniedrigt werden. Auf diese Weise kann in Abhängigkeit von der auf der Scheibe vorhandenen Regenmenge ein selbsttätiger, stufenloser Übergang von einer ersten auf eine zweite Wischstufe erfolgen. Gegebenenfalls schaltet sich die Wischereinheit selbsttätig ab.

Ein besonderer Vorteil des erfindungsgemäßen Verfahrens ist darin zu sehen, dass zur feuchtigkeitsabhängigen Steuerung der Scheibenwischvorrichtung keinerlei zusätzliche Sensorik (z.B. Regensensor) benötigt wird. Außerdem bietet das erfindungsgemäße Verfahren gegenüber herkömmlichen Verfahren zur feuchtigkeitsabhängigen Steuerung der Scheibenwischvorrichtung mit Regensensoren den Vorteil einer verbesserten Sensitivität. Dies liegt daran, dass herkömmliche Verfahren in der Regel einen Regensensor verwenden, der üblicherweise in einer Oberkante der Scheibenmitte angeordnet ist. Dadurch lässt sich unvorteilhaft eine im wesentlichen auf punktuellen Messdaten basierte Ermittlung der Regenmenge durchführen, wohingegen das erfindungsgemäße Verfahren die gesamte Wischfläche auf der Scheibe integrativ als Analysefläche benutzt.

In einer Weiterbildung wird die der Erfindung zugrundeliegende Aufgabe gelöst mit einem Verfahren zur feuchtigkeitsabhängigen Steuerung einer Scheibenwischvorrichtung, insbesondere eines Kraftfahrzeuges, wobei eine Intervalllänge zwischen zwei Wischzyklen und/oder eine Geschwindigkeit einer Wischereinheit der Scheibenwischvorrichtung gesteuert wird. Die Intervalllänge und/oder die Geschwindigkeit der Wischereinheit wird dabei mit Hilfe eines Streckenmodells der Wischereinheit ermittelt.

Gemäß der Weiterbildung wird eine Ermittlung des Lastmoments in Form einer Schätzung aus dem Streckenmodell vorgenommen. Das Lastmoment korreliert unmittelbar mit dem Feuchtigkeitszustand der Scheibe.

Somit ist in vorteilhafter Weise mit Hilfe der gewonnenen Information über den Feuchtigkeitszustand eine nächste Intervalllänge (Pausenzeit) vor dem nachfolgenden Wischzyklus prognostizierbar. Auf diese Weise kann ein Wischintervallzyklus stets der aktuell auf der Scheibe vorhandenen Regenmenge angepasst werden.

Eine weitere bevorzugte Ausgestaltung des erfindungsgemäßen Verfahrens sieht eine Modellierung und Benutzung eines mathematischen Streckenmodells der Wischereinheit vor, wobei in einer weiteren bevorzugten Ausgestaltung des erfindungsgemäßen Verfahrens vorgesehen ist, dass im Streckenmodell ein Störmodell verwendet wird, in welchem das Lastmoment der Wischereinheit als Störgröße definiert ist.

Dadurch kann in vorteilhafter Weise aufgrund einer Modellgüte des Streckenmodells das auf die Wischarme wirkende Lastmoment gut bestimmt werden. Weiterhin lässt sich ein Einfluss einer variablen aerodynamischen Last aufgrund unterschiedlicher Fahrgeschwindigkeiten aus einer Charakteristik des Lastmoments herausrechnen, wodurch als Ergebnis das zwischen Wischarm und Scheibe wirkende Reibungsmoment erhalten wird. Das ermittelte Reibungsmoment enthält bezüglich des Feuchtigkeitszustandes der Scheibe günstigerweise eine hohe Aussagekraft.

Demgegenüber können bei einer reinen Auswertung eines von der Scheibenwischvorrichtung aufgenommenen Stromes, wie es in der DE 39 29 196 A1 gezeigt ist, Beschleunigungsmomente sowie eine Windlast auf die Wischarme nicht von einem Reibungsmomentenanteil separiert werden. Dadurch ist eine Genauigkeit der Ermittlung.des Feuchtigkeitszustandes der Scheibe bei diesem herkömmlichen Verfahren als gering einzustufen.

In einer weiteren bevorzugten Ausführungsform des erfindungsgemäßen Verfahrens ist es vorgesehen, dass das Lastmoment auf die Wischereinheit aus einem Ansteuersignal und einem Drehwinkelsignal der Wischereinheit bestimmt wird, wobei optional zusätzlich eine Stromaufnahme und/oder eine Drehzahl der Wischereinheit zur Ermittlung des Lastmomentes verwendet wird.

In vorteilhafter Weise muss für den Elektromotor der Scheibenwischvorrichtung keine zusätzliche Sensorik vorgesehen werden, wobei insbesondere eine Messung des Motorstromes nicht erforderlich ist.

Ein besonderer Vorteil des erfindungsgemäßen Verfahrens liegt in einer Ausnützung einer Korrelation zwischen der auf der Scheibe vorhandenen Regenmenge und dem zwischen der Scheibe und dem Wischerblatt vorherrschenden Reibungswert. Dadurch wird im Falle, dass der zwischen der Scheibe und dem Wischerblatt ermittelte Reibungswert derart hoch ist, dass eine im Wesentlichen trockene Scheibe vorliegt, die Wischereinheit gänzlich abgeschaltet. Eine verringerte Abnützung und somit verlängerte Lebensdauer der Scheibenwischvorrichtung ist dadurch günstigerweise nachhaltig unterstützt.

Die Erfindung wird nachfolgend anhand der beigefügten Figuren detailliert beschrieben. Dabei zeigt:

Fig. 1    eine prinzipielle Darstellung einer Scheibenwischvorrichtung, mit der das erfindungsgemäße Verfahren einsetzbar ist;

Fig. 2    eine schematische Darstellung eines mathematischen Modells einer Wischereinheit;

Fig. 3    einen prinzipiellen Zusammenhang zwischen einer Windlast auf die Wischereinheit und einem Wischwinkel in Abhängigkeit von einer Anströmgeschwindigkeit auf die Wischereinheit; und

Fig. 4    eine prinzipielle Gesamtdarstellung einer Scheibenwischvorrichtung, mit der das erfindungsgemäße Verfahren einsetzbar ist.

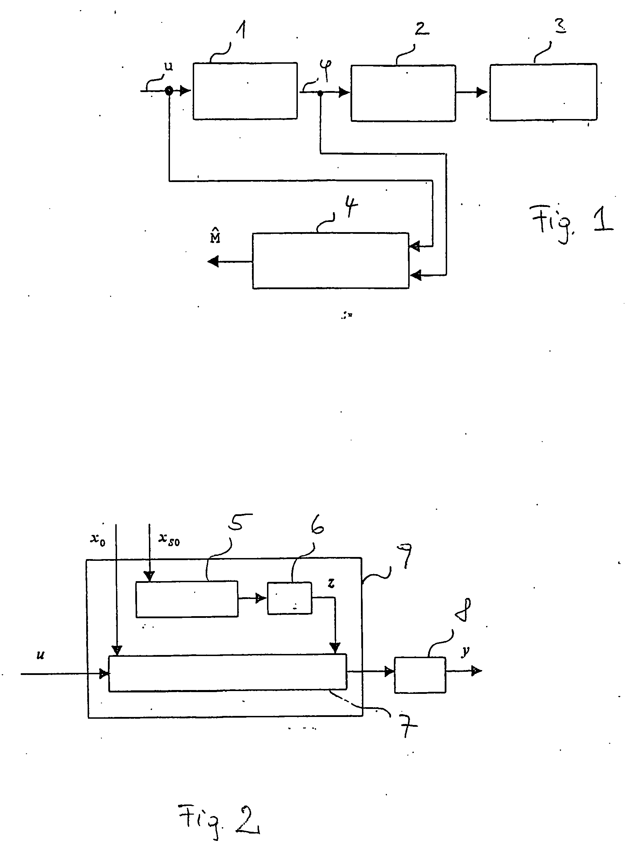

Figur 1 zeigt eine prinzipielle Darstellung einer Scheibenwischvorrichtung, mit der das erfindungsgemäße Verfahren einsetzbar ist. Ein Elektromotor 1 ist mit einem Getriebe 2 verbunden. Das Getriebe 2 ist mit einem Wischarm 3 verbunden und treibt diesen an. Eine Stellgröße u, die beispielsweise als elektrische Spannung ausgebildet sein kann, wird dem Elektromotor 1 zugeführt. Am Ausgang des Elektromotors 1 steht ein Drehwinkelsignal $\varphi$ zur Verfügung, das sowohl dem Getriebe 2 als auch einem Zustandsbeobachter 4 zugeführt wird. Dem Zustandsbeobachter 4 wird weiterhin die Stellgröße u zugeführt. Aus den Größen, die dem Zustandsbeobachter 4 zugeführt werden, wird ein auf die Wischereinheit wirkendes Lastmoment $\hat{M}$ nach Verfahren bestimmt, die im Stand der Technik bekannt sind und für das erfindungsgemäße Verfahren eingesetzt werden.

Figur 2 zeigt eine schematische Darstellung eines mathematischen Modells der Wischeinheit, das vom Zustandsbeobachter 4 eingesetzt wird. Ein erweitertes Streckenmodell 9 umfasst dabei ein Streckenmodell 7, ein Störmodell 5 und eine Ausgangsmatrix 6 des Störmodells 5. Eine Stellgröße $\underline{u}$ bzw. ein Anfangszustand $\underline{x}_0$ dienen einer definierten Zustandsbeschreibung des dynamischen Streckenmodells 7. Ein Anfangszustand $\underline{x}_{S0}$ des Störmodells 5 dient einer definierten Zustandsbeschreibung des Störmodells 5. Über eine Ausgangsmatrix 8 des erweiterten Streckenmodells 9 steht eine Ausgangsgröße $\underline{y}$ des erweiterten Streckenmodells 9 zur Verfügung.

Das erweiterte Streckenmodell 9 lässt sich durch folgende mathematische Beziehungen beschreiben:

$$
\underbrace{\begin{bmatrix} \underline{\dot{x}}_M \\ \underline{\dot{x}}_S \end{bmatrix}}_{\underline{\dot{x}}} = \underbrace{\begin{bmatrix} \underline{A}_M & \underline{EC}_S \\ 0 & \underline{A}_S \end{bmatrix}}_{\underline{A}} \underbrace{\begin{bmatrix} \underline{x}_M \\ \underline{x}_S \end{bmatrix}}_{} + \underbrace{\begin{bmatrix} \underline{B}_M \\ 0 \end{bmatrix}}_{\underline{B}} \underline{u}
$$

$$
\underline{y} = \underbrace{\begin{bmatrix} \underline{C}_M & 0 \end{bmatrix}}_{\underline{C}} \begin{bmatrix} \underline{x}_M \\ \underline{x}_S \end{bmatrix}
$$

Das erfindungsgemäße Verfahren bedient sich des in modernen Regelungskonzepten bekannten Zustandsbeobachters, mit dessen Hilfe nicht messbare Zustandsgrößen geschätzt werden können. Grundlage dafür, ist das mathematische Streckenmodell der gesamten Scheibenwischvorrichtung, das in folgender Form beschrieben werden kann:

Zustandsdifferentialgleichung:

$$
\underline{\dot{x}}_M = \underline{A}_M \underline{x}_M + \underline{B}_M \underline{u} + \underline{E}\,\underline{z}
$$

Gleichung für die Messgrösse:

$$
\underline{y} = \underline{C}_M\,\underline{x}_M
$$

Das Störmodell für eine Störgrösse $\underline{z}$, welches das Streckenmodell erweitert, kann mathematisch folgendermaßen dargestellt werden:

$$
\underline{\dot{x}}_S = \underline{A}_S\,\underline{x}_S
$$

$$
\underline{z} = \underline{C}_S\,\underline{x}_S
$$

Die einzelnen Variablen und Parameter des Strecken- und des Störmodells haben dabei folgende Bedeutung:

| | |
|---|---|
| $\underline{x}_M$ | Zustandsgrössen des Streckenmodells |
| $\underline{x}_0$ | Anfangswerte der Zustandsgrösse des Streckenmodells |
| $\underline{x}_S$ | Zustandsgrössen des Störmodells |
| $\underline{x}_{S0}$ | Anfangswerte der Zustandsgrösse des Störmodells |
| $\underline{u}$ | Stellgrösse |
| $\underline{y}$ | Ausgangsgrösse |
| $\underline{z}$ | Störgrösse |

$\underline{A}_M$     Dynamikmatrix des Streckenmodells

$\underline{B}_M$     Eingangsmatrix des Streckenmodells

$\underline{C}_M$     Ausgangsmatrix des Streckenmodells

$\underline{A}_S$     Dynamikmatrix des Störmodells

$\underline{E}$     Matrix, über die die Störgrösse $\underline{z}$ auf das Streckenmodell wirkt

Im Streckenmodell sind wesentliche dynamische Eigenschaften der Scheibenwischvorrichtung mathematisch formuliert. Dies kann in Form von Grössen erfolgen, die aus physikalischen Parametern abgeleitet sind. Beispielsweise kann dies eine elektrische und/oder mechanische Charakteristik des Elektromotors, Elastizitäten des Getriebes und des Wischarms sowie deren Trägheitsmomente umfassen. Das normalerweise nicht messbare Lastmoment auf den Wischarm setzt sich aus Reibungs-Windlast- sowie Beschleunigungsanteilen zusammen. Der Beschleunigungsanteil wird durch geeignete Modellbeschreibung (Streckenmodell) berücksichtigt, der Reibungs- und Windlastanteil wird vorzugsweise als Störgrösse definiert.

Mit Hilfe des Zustandsbeobachters, der vorzugsweise als Luenberger-Beobachter oder als Kalman-Filter ausgebildet sein kann, können Zustandsgrößen des Streckenmodells mittels eines Schätzprozesses ermittelt werden. Der Zustandsbeobachter lässt sich dabei mathematisch folgendermassen formulieren :

$$\dot{\hat{\underline{x}}} = (\underline{A} - \underline{L}\,\underline{C})\,\hat{\underline{x}} + \underline{B}\,\underline{u} + \underline{L}\,\underline{y}$$

$$\hat{\underline{y}}_B = \underline{C}_B\,\hat{\underline{x}} + \underline{D}_B\,\underline{u}$$

Dabei ist $\underline{L}$ eine in einem Entwurfsprozess des Zustandsbeobachters zu definierende Größe. Bei einer geeigneten Formulierung der Beobachtermatrizen $\underline{C}_B$ und $\underline{D}_B$ steht unter anderem ein auf den Wischarm der Wischereinheit wirkendes, geschätztes Lastmoment $\hat{\underline{M}}$ als Ausgangsgröße $\hat{\underline{y}}_B$ des Zustandsbeobachters zur Verfügung und kann für eine erfindungsgemäße, optimierte Regelung der Scheibenwischvorrichtung herangezogen werden.

Erläuterungen zur Zustandsschätzung mittels Zustandsbeobachter finden sich beispielweise im Lehrbuch von Gerd Schulz "Regelungstechnik" (Oldenbourg Verlag, München/Wien, ISBN 3-486-25858-3) auf den Seiten 121 ff.

Ein Modell der Wischereinheit lässt sich mathematisch wie folgt beschreiben:

$$\underline{x} = \begin{bmatrix} \underline{x}_M \\ \underline{x}_S \end{bmatrix} = \begin{bmatrix} \omega \\ \varphi \\ M \end{bmatrix}, \quad \underline{x}_s = M, \quad \underline{u} = U$$

$$\underline{A} = \begin{bmatrix} \dfrac{K_M{}^2}{R_A J} & 0 & \dfrac{1}{J} \\ \ddot{u} & 0 & 0 \\ 0 & 0 & 0 \end{bmatrix}, \quad \underline{B} = \begin{bmatrix} \dfrac{K_M}{R_A J} \\ 0 \\ 0 \end{bmatrix}, \quad \underline{C}_M = \begin{bmatrix} 1 & 0 \end{bmatrix}$$

$$\underline{M} = \begin{bmatrix} 0 & 0 & 1 \end{bmatrix} \underline{x}$$

In den Gleichungen haben die einzelnen Grössen folgende Bedeutung:

U    Eingangsspannung für den Elektromotor 1
$R_A$    Ankerwiderstand des Elektromotors 1
$K_M$    Motorkonstante des Elektromotors 1
J    kombiniertes, effektives Trägheitsmoment von Anker des Elektromotors 1 und Wischarm
ü    Übersetzungsverhältnis des Getriebes 2

Eine verbesserte Schätzung des Lastmomentes $\underline{M}$ erhält man, wenn das mathematische Modell um Elastizitäten des Getriebes, Elastizitäten des Wischarms (Mehrkörpermodell) sowie um eine Induktivität des Elektromotors erweitert wird. Gegebenenfalls können auch Nichtlinearitäten, wie z.B. arbeitspunktabhängige Änderungen der Motorkonstante berücksichtigt werden. Das auf den Wischarm wirkende Lastmoment setzt sich aus Reibungs- und Windlastanteilen zusammen. Beschleunigungsmomente sind im geschätzten Lastmoment nicht mehr enthalten, da Trägheitsmomente und damit die Beschleunigungsmomente in der Modellstruktur bereits berücksichtigt sind.

Als Eingangsgrößen für den Zustandsbeobachter können für eine verbesserte Schätzung des Lastmoments neben der Stellgröße u und dem Drehwinkelsignal φ in Abhängigkeit von weiter vorhandener Sensorik auch noch mehrere zusätzliche Signale verwendet werden, wie beispielsweise ein Drehzahlsignal, ein Stromsignal usw.

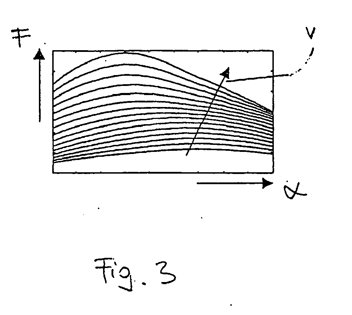

Figur 3 zeigt einen prinzipiellen Zusammenhang zwischen einer auf die Wischereinheit einwirkenden Windlast F und dem Wischwinkel α in Abhängigkeit von einer Anströmgeschwindigkeit v auf die Wischereinheit. Für jeden bestimmten Kraftfahrzeugtyp lassen sich die Windlastanteile vorab bestimmen und in einem Kennfeld in einem Steuergerät 15 der Wischereinheit hinterlegen. Mit Kenntnis einer Geschwindigkeit des Fahrzeuges lässt sich der Anteil der Windlast direkt bestimmen, so dass als Schätzwert für das Reibungsmoment folgende Beziehung gilt:

$$M_{Reib} \; = \; \hat{M} \; - \; M_{Windlast}$$

Auch für den Fall, dass keinerlei Informationen über die Anströmgeschwindigkeit v vorhanden sind, kann ein Schätzwert über die Reibung ermittelt werden, weil eine charakteristische Form der Windlast aufgrund der im Steuergerät hinterlegten Kennfelder bekannt ist und das Windlastmoment $M_{Windlast}$ stets das gleiche Vorzeichen aufweist. Dies resultiert in einer Verschiebung des Mittelwertes des geschätzten Gesamtmoments auf einen Betrag von ungleich Null.

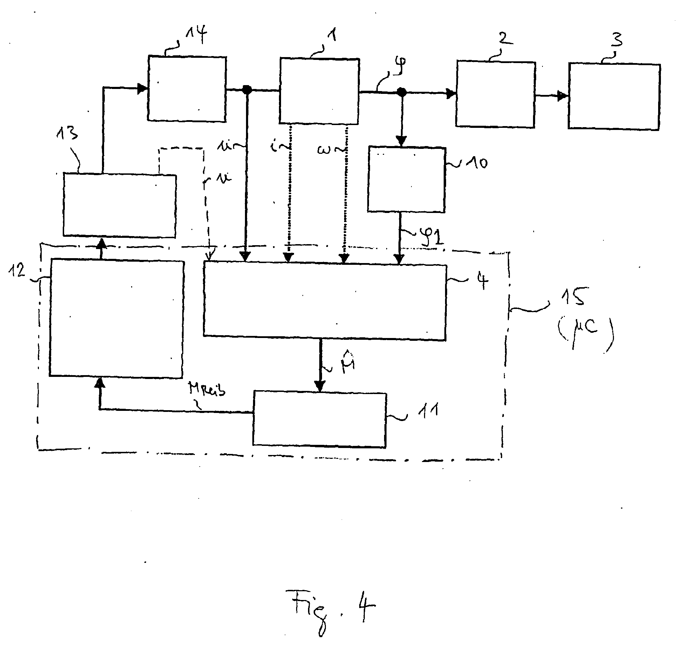

Figur 4 zeigt anhand eines Blockschaltbildes einer Scheibenwischvorrichtung einen Ablauf des erfindungsgemäß vorgeschlagenen Verfahrens, wobei im Vergleich zur Darstellung in Figur 1 ein erhöhter Detaillierungsgrad angegeben ist. So ist in der Figur beispielsweise erkennbar, dass das vom Elektromotor 1 gelieferte Drehwinkelsignal φ von einer Messeinrichtung 10 aufbereitet und daraufhin dem Zustandsbeobachter 4 zugeführt wird. Alternativ kann auch ein Drehwinkelsignal nach dem Getriebe 2 verwendet werden. Ferner ist der Figur zu entnehmen, dass das Eingangssteuersignal u für den Elektromotor 1 von einer H-Brücke 14 zugeführt wird. Ferner wird auch dem Zustandsbeobachter 4 das Eingangssteuersignal u von der H-Brücke 14 zugeführt. Optional kann das Eingangssteuersignal u auch von einer Steuereinrichtung 13 rechnerisch ermittelt und an den Zustandsbeobachter 4 zugeführt werden.

Für eine verbesserte Schätzung des Lastmoments $\hat{M}$ können dem Zustandsbeobachter optional auch Steuersignale i, ω die als Maß für eine Stromaufnahme des Elektromotors 1 bzw. für eine Winkelgeschwindigkeit des Elektromotors 1 dienen, zugeführt werden. Die vom Zustandsbeobachter 4 ermittelte (geschätzte) Ausgangsgröße $\hat{M}$ des Lastmoments wird einer Subtraktionseinrichtung 11 zugeführt, die eine Subtraktion des Windlastmomentes $M_{Windlast}$ vom geschätzten Lastmoment $\hat{M}$ vornimmt. Als Ausgangsgröße der Subtraktionseinrichtung 11 steht das Reibungsmoment $M_{Reib}$ auf die Wischereinheit zur Verfügung, das einer ersten Einrichtung 12 zugeführt wird.

In der ersten Einrichtung 12 sind Tabellen abgelegt, die in Abhängigkeit vom ermittelten Reibungsmoment $M_{Reib}$ Pausenzeiten $T_{Pause}$ zwischen Wischzyklen sowie Wischgeschwindigkeiten ω(t) in Abhängigkeit vom ermittelten Reibungsmoment $M_{Reib}$ und der ermittelten Pausenzeit $T_{Pause}$ bereitstellen. Aus den Tabellenwerten werden Steuersignale gebildet, die der Steuereinrichtung 13 zugeführt werden, wobei die Steuereinrichtung die Steuersignale für die H-Brücke 14 aufbereitet und der H-Brücke zuführt. Die H-Brücke 14 umfasst vorteilhafterweise gesteuerte Schalterelemente der Leistungselektronik, mit deren Hilfe das Eingangssteuersignal u getaktet und dem Elektromotor 1 zugeführt wird.

Der Zustandsbeobachter 4, die Subtraktionseinrichtung 11 sowie die erste Einrichtung 12 können vorteilhafterweise in einer zweiten Einrichtung 15 zusammengefasst werden, wobei die zweite Einrichtung 15 als Mikrorechner ausgebildet ist.

Mit Hilfe des erfindungsgemäßen Verfahrens kann ein Verlauf des geschätzten Lastmoments anhand von Normcharakteristika bewertet werden. Dadurch kann beispielsweise aufgrund einer Schwankung im Verlauf des Lastmoments vorteilhafterweise auch eine Teilbefeuchtung der Scheibe erkannt werden.

Weiterhin ist es mittels der Bewertungen der Verläufe des Lastmoments beispielsweise auch möglich, aufgrund deutlich erhöhter Reibungsmomente Verschmutzungen der Scheibe festzustellen. In diesem Fall kann günstigerweise gegebenenfalls eine Waschfunktion der Scheibenwischvorrichtung initiiert werden.

Zusammenfassend lässt sich das erfindungsgemäße Verfahren in folgende wesentliche Schritte aufteilen:

- Während jedes Wischzyklus wird das auf den Wischarm wirkende Lastmoment mit Hilfe des Zustandsbeobachters geschätzt.

- Von diesem geschätzten Lastmoment wird der Windlastanteil subtrahiert, so dass als Ergebnis das Reibungsmoment zwischen Wischarm und Scheibe bekannt ist.

- Das Reibungsmoment steht in einem direkten Zusammenhang mit der auf der Scheibe befindlichen Regenmenge. Dabei bedeutet ein hohes Reibungsmoment eine geringe Regenmenge auf der Scheibe, wohingegen ein niedriges Reibungsmoment eine große Regenmenge auf der Scheibe bedeutet.

- In Abhängigkeit vom geschätzten Reibungsmoment wird rechnerisch ermittelt, wie lange das nächste Zeitintervall bis zum nächsten Wischvorgang zu sein hat bzw. wie hoch die Wischgeschwindigkeit sein soll.

- Das ermittelte Zeitintervall wird einer Steuereinheit der Scheibenwischvorrichtung zugeführt.

- Beim nächsten Wischvorgang wird das Zeitintervall gemäß den vorherigen Schritten berücksichtigt, wodurch eine Anzahl der Wischzyklen angepasst und gegebenenfalls (bei trockener Scheibe) die Wischereinheit vollständig abgeschaltet wird. Bei einer Abschalung der Wischereinheit muss ein Start eines neuerlichen Wischvorganges manuell eingeleitet werden, damit neue Daten über den Feuchtigkeitszustand der Scheibe gewonnen werden können.

## Patentansprüche

1. Verfahren zur Steuerung einer Intervalllänge zwischen zwei Wischzyklen und/oder einer Geschwindigkeit einer Wischereinheit mit mindestens einem Wischer für eine Scheibe, insbesondere eines Kraftfahrzeuges, wobei eine Wischfunktion abhängig von einem Feuchtigkeitsgrad der Scheibe geregelt wird, **dadurch gekennzeichnet, dass** ein Lastmoment der Wischereinheit mithilfe eines Zustandsbeobachters geschätzt wird, dass ein Windlastanteil am Lastmoment ermittelt wird, dass ein Reibungsmoment zwischen der Scheibe und der Wischereinheit durch Herausrechnen des Windlastanteils aus dem Lastmoment der Wischereinheit ermittelt wird, und dass das Reibungsmoment als Maß für den Feuchtigkeitsgrad verwendet wird.

2. Verfahren nach Anspruch 1, **dadurch gekennzeichnet, dass** die Intervalllänge und/oder die Geschwindigkeit der Wischereinheit aus einem Streckenmodell ermittelt wird.

3. Verfahren nach Anspruch 1, **dadurch gekennzeichnet, dass** ein Streckenmodell für die Wischereinheit verwendet wird.

4. Verfahren nach einem der Ansprüche 2 oder 3, **dadurch gekennzeichnet, dass** im Streckenmodell ein Störmodell verwendet wird, in dem das Lastmoment als Störgröße definiert ist.

5. Verfahren nach einem der Ansprüche 1 oder 4, **dadurch gekennzeichnet, dass** das Lastmoment aus einem Ansteuersignal für die Wischereinheit und einem Drehwinkelsignal der Wischereinheit sowie optional zusätzlich einer Stromaufnahme der Wischereinheit und/oder einer Drehzahl der Wischereinheit ermittelt wird.

6. Verfahren nach einem der Ansprüche 2 oder 3, **dadurch gekennzeichnet, dass** im Streckenmodell dynamische Eigenschaften, Elastizitäten und Trägheitsmomente der Wischereinheit definiert sind.

7. Verfahren nach einem der Ansprüche 2 oder 3, **dadurch gekennzeichnet, dass** das Streckenmodell vom Typ

$$\dot{\underline{x}}_M = \underline{A}_M \, \underline{x} + \underline{B}_M \, \underline{u} + \underline{E} \, \underline{z}$$

ist, wobei $\underline{A}_M$ eine Dynamikmatrix des Streckenmodells, $\underline{B}_M$ eine Eingangsmatrix des Streckenmodells und $\underline{E}$ eine Matrix, über die die Störgröße auf die Strecke wirkt, bezeichnet.

8. Verfahren nach einem der Ansprüche 4 bis 7, **dadurch gekennzeichnet, dass** das Störmodell durch folgendes Gleichungssystem beschrieben wird:

$$\underline{\dot{x}}_S = \underline{A}_S \, \underline{x}_S, \; \underline{z} = \underline{C}_S \, \underline{x}_S$$

wobei $\underline{A}_S$ eine Dynamikmatrix des Störmodells, $\underline{C}_S$ eine Ausgangsmatrix des Störmodells und $\underline{z}$ eine Störgröße definiert.

9. Verfahren nach einem der Ansprüche 2 oder 3, **dadurch gekennzeichnet, dass** das Intervall zwischen zwei Wischzyklen und/oder die Geschwindigkeit der Wischereinheit mit Hilfe eines Zustandsbeobachters geschätzt wird.

10. Verfahren nach Anspruch 9, **dadurch gekennzeichnet, dass** der Zustandsbeobachter mit folgendem Gleichungssystem beschrieben wird:

$$\underline{\dot{\hat{x}}} = (\underline{A} - \underline{L}\,\underline{C})\,\underline{\hat{x}} + \underline{B}\,\underline{u} + \underline{L}\,\underline{y}$$

$$\underline{\hat{y}}_B = \underline{C}_B \underline{\hat{x}} + \underline{D}_B \underline{u}$$

wobei $\underline{L}$ eine in einem Entwurfsprozess zu definierende Größe ist.

11. Steuereinheit (15) mit einem Speicher, in dem ein Verfahren nach einem der Ansprüche 1 bis 10 abgelegt ist.

**Claims**

1. Method for controlling an interval length between two wiping cycles, and/or a speed of a wiper unit having at least one wiper for a screen, in particular of a motor vehicle, a wiping function being regulated as a function of a degree of moisture of the screen, **characterized in that** a load moment of the wiper unit is estimated with the aid of a state monitor, **in that** a wind load component of the load moment is determined, **in that** a friction moment between the screen and the wiper unit is determined by computing the wind load component from the load moment of the wiper unit, and **in that** the friction moment is used as a measure of the degree of moisture.

2. Method according to Claim 1, **characterized in that** the interval length and/or the speed of the wiper unit are/is determined from a system model.

3. Method according to Claim 1, **characterized in that** a system model is used for the wiper unit.

4. Method according to either of Claims 2 and 3, **characterized in that** use is made in the system model of a perturbation model in which the load moment is defined as perturbation variable.

5. Method according to either of Claims 1 and 4, **characterized in that** the load moment is determined from a drive signal for the wiper unit and from a rotation angle signal of the wiper unit and optionally additionally a current consumption of the wiper unit and/or a rotational speed of the wiper unit.

6. Method according to either of Claims 2 and 3, **characterized in that** dynamic properties, elasticities and moments of inertia of the wiper unit are defined in the system model.

7. Method according to either of Claims 2 and 3, **characterized in that** the system model is of the type

$$\dot{\underline{x}}_m \;=\; \underline{A}_m \;\underline{x}\;+\;\underline{B}_m\;\underline{u}\;+\;\underline{E}\;\underline{z},$$

$\underline{A}_m$ denoting a dynamics matrix of the system model, $\underline{B}_m$ denoting an input matrix of the system model, and $\underline{E}$ denoting a matrix via which the perturbation variable acts on the system.

8. Method according to one of Claims 4 to 7, **characterized in that** the perturbation model is described by the following system of equations:

$$\dot{\underline{x}}_s \;=\; \underline{A}_s \;\underline{x}_s,\quad \underline{z}\;=\;\underline{C}_s\;\underline{x}_s$$

$\underline{A}_s$ defining a dynamics matrix of the perturbation model, $C_s$ defining an output matrix of the perturbation model, and $\underline{z}$ defining a perturbation variable.

9. Method according to either of Claims 2 and 3, **characterized in that** the interval between two wiping cycles and/or the speed of the wiper unit are/is estimated with the aid of a state monitor.

10. Method according to Claim 9, **characterized in that** the state monitor is described with the aid of the following system of equations:

$$\dot{\hat{\underline{x}}} = (\underline{A} - \underline{L}\,\underline{C})\hat{\underline{x}} + \underline{B}\,\underline{u} + \underline{L}\,\underline{y}$$

$$\hat{\underline{y}}_B \;=\; \underline{C}_B\hat{\underline{x}}\;+\;\underline{D}_B\;\underline{u}$$

$\underline{L}$ being a variable which is to be defined in a design process.

11. Control unit (15) having a memory in which a method according to one of Claims 1 to 10 is stored.

**Revendications**

1. Procédé de commande de la durée de l'intervalle entre deux cycles d'essuyage et/ou de la vitesse d'une unité d'essuyage, comprenant au moins un essuie-glace de vitre, notamment d'un véhicule automobile, dont la fonction d'essuyage est régulée selon le degré d'humidité de la vitre,
**caractérisé en ce qu'**
on évalue le couple de charge de l'unité d'essuyage à l'aide d'un observateur d'état,
on détermine la composante de charge de vent dans le couple de charge,
on détermine un couple de frottement entre la vitre et l'unité d'essuyage en calculant la composante de charge de vent du couple de charge de l'unité d'essuyage et
on utilise le couple de frottement comme mesure du degré d'humidité.

2. Procédé selon la revendication 1,
**caractérisé en ce qu'**
on détermine la durée de l'intervalle et/ou la vitesse de l'unité d'essuyage à partir d'un modèle de trajet.

3. Procédé selon la revendication 1,
**caractérisé en ce qu'**
on utilise un modèle de trajet pour l'unité d'essuyage.

**4.** Procédé selon l'une des revendications 2 ou 3,
**caractérisé en ce que**
dans le modèle de trajet, on utilise un modèle de perturbation dans lequel le couple de charge est défini comme grandeur perturbatrice.

**5.** Procédé selon l'une des revendications 1 ou 4,
**caractérisé en ce qu'**
on détermine le couple de charge à partir d'un signal de commande de l'unité d'essuyage et d'un signal d'angle de rotation de l'unité d'essuyage ainsi qu'en option, en plus, avec le courant absorbé par l'unité d'essuyage et/ ou la vitesse de rotation de l'unité d'essuyage.

**6.** Procédé selon l'une des revendications 2 ou 3,
**caractérisé en ce que**
dans le modèle de trajet on définit les propriétés dynamiques, les élasticités et les moments d'inertie de l'unité d'essuyage.

**7.** Procédé selon l'une des revendications 2 ou 3,
**caractérisé en ce que**
le modèle de trajet est du type

$$\dot{\underline{x}}_M = \underline{A}_M \, \underline{x} + \underline{B}_M \, \underline{u} + \underline{E}\,\underline{z}$$

relation dans laquelle $\underline{A}_M$ est une matrice dynamique du modèle de trajet, $\underline{B}_M$ est une matrice d'entrée du modèle de trajet et $\underline{E}$ est une matrice concernant la grandeur perturbatrice agissant sur le trajet.

**8.** Procédé selon l'une des revendications 4 à 7,
**caractérisé en ce que**
le modèle de perturbation est décrit par le système d'équation suivant :

$$\dot{\underline{x}}_S = \underline{A}_S \, \underline{x}_S, \quad \underline{z} = \underline{C}_S \, \underline{x}_S$$

système dans lequel
$\underline{A}_s$ est une matrice dynamique du modèle de perturbation, $\underline{C}_s$ est une matrice de sortie du modèle de perturbation et $\underline{z}$ est une grandeur parasite.

**9.** Procédé selon l'une des revendications 2 ou 3,
**caractérisé en ce que**
l'intervalle entre deux cycles d'essuyage et/ou la vitesse de l'unité d'essuyage sont évalués à l'aide d'un observateur d'état.

**10.** Procédé selon la revendication 9,
**caractérisé en ce que**
l'observateur d'état se décrit par le système d'équations suivant :

$$\dot{\hat{\underline{x}}} = (\underline{A} - \underline{L}\,\underline{C})\,\hat{\underline{x}} + \underline{B}\,\underline{u} + \underline{L}\,\underline{y}$$

$$\hat{\underline{y}}_B = \underline{C}_B \, \hat{\underline{x}} + \underline{D}_B \, \underline{u}$$

système dans lequel $\underline{L}$ est une grandeur indéfinie dans le procédé projeté.

**11.** Unité de commande (15) comportant une mémoire dans laquelle est enregistré un procédé selon l'une des revendications 1 à 10.

Fig. 1

Fig. 2

Fig. 3

Fig. 4

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3929196 A1
- EP 1300304 A2
- EP 1010594 A1

**In der Beschreibung aufgeführte Nicht-Patentliteratur**

- **GERD SCHULZ.** Regelungstechnik. Oldenbourg Verlag, 121